# EUROPÄISCHE PATENTSCHRIFT

(11) **EP 3 501 870 B1**
(45) Veröffentlichungstag und Bekanntmachung des Hinweises auf die Patenterteilung: **22.02.2023**
(21) Anmeldenummer: 18201218.7
(22) Anmeldetag: 18.10.2018
(51) Int. Cl.: B60K 6/547, B60K 6/44, B60K 1/02, B60W 10/113, F16D 13/38, B60W 10/02, B60W 10/06, B60W 10/08, B60W 20/20, B60W 20/30, B60W 20/40, B60W 30/18, B60W 30/188, B60K 6/48, B60K 6/50, B60W 20/00, B60K 6/26

(54) **VERFAHREN ZUM BETREIBEN EINER ANTRIEBSEINRICHTUNG FÜR EIN KRAFTFAHRZEUG SOWIE ENTSPRECHENDE ANTRIEBSEINRICHTUNG**
METHOD FOR OPERATING A DRIVE DEVICE FOR A MOTOR VEHICLE AND CORRESPONDING DRIVE DEVICE
PROCÉDÉ DE FONCTIONNEMENT D'UN DISPOSITIF D'ENTRAÎNEMENT POUR UN VÉHICULE AUTOMOBILE AINSI QUE DISPOSITIF D'ENTRAÎNEMENT CORRESPONDANT

(30) Priorität: 21.12.2017 DE 102017223488
(43) Veröffentlichungstag der Anmeldung: 26.06.2019
(73) Patentinhaber: AUDI AG, 85045 Ingolstadt (DE)
(72) Erfinder: Glück, Christian, 85072 Eichstätt (DE)

(56) Entgegenhaltungen:
- EP-A1- 1 714 817
- EP-A1- 2 289 751
- DE-A1- 10 133 695
- DE-A1- 10 305 639
- DE-A1-102010 004 711

## Beschreibung

Die Erfindung betrifft ein Verfahren nach Anspruch 1 zum Betreiben einer Antriebseinrichtung für ein Kraftfahrzeug.

Die Erfindung betrifft weiterhin eine Antriebseinrichtung nach Anspruch 7 zur Durchführung des Verfahrens nach Anspruch 1.

Aus dem Stand der Technik ist beispielsweise die Druckschrift DE 102 18 186 A1 bekannt. Diese betrifft ein Verfahren zur Steuerung eines Anfahrvorgangs eines Fahrzeugs mit einem Doppelkupplungsgetriebe, das ein erstes und ein zweites Teilgetriebe umfasst, wobei jedes Teilgetriebe mehrere schaltbare Gangstufen aufweist und das erste Teilgetriebe durch eine erste Kupplung und das zweite Teilgetriebe durch eine zweite Kupplung mit einem Antriebsmotor antreibbar verbindbar ist. Dabei ist vorgesehen, dass während des Anfahrvorgangs die zweite Kupplung soweit geschlossen wird, bis sie zumindest einen Teil des vom Antriebsmotor auf den Antrieb übertragenen Drehmoment schlupfend überträgt, um die erste Kupplung zu entlasten.

Aus dem Stand der Technik ist weiterhin die Druckschrift EP 1 714 817 A1 bekannt. Diese beschreibt ein Doppelkupplungsgetriebe insbesondere für ein Kraftfahrzeug, umfassend eine Doppelkupplungsanordnung mit einer ersten Kupplung und einer zweiten Kupplung sowie mit einer Eingangsseite zum Verbinden der Doppelkupplungsanordnung mit einem Motor; eine erste Eingangswelle und eine zweite Eingangswelle, wobei sich die erste Eingangswelle über die erste Kupplung und sich die zweite Eingangswelle über die zweite Kupplung mit dem Motor verbinden lässt; wenigstens eine Ausgangswelle; mehrere Zahnradpaare zur Verbindung der Eingangswellen mit der wenigstens einen Ausgangswelle, wobei durch ein Zahnradpaar ein Drehmoment zwischen einer der Eingangswellen und der wenigstens einen Ausgangswelle übertragbar ist, wenn einen dem Zahnradpaar zugeordnete Gangschaltkupplung geschlossen ist; und wenigstens eine erste Antriebseinheit und eine zweite Antriebseinheit. Das Doppelkupplungsgetriebe zeichnet sich dadurch aus, dass die erste Antriebs einer mit der Eingangsseite der Doppelkupplungsanordnung verbunden ist und die zweite Antriebseinheit mit einer der Eingangswellen oder mit der Ausgangswelle verbunden ist.

Aus dem Stand der Technik sind weiterhin die Druckschriften DE 101 33 695 A1, DE 103 05 639 A1, DE 10 2010 004 711 A1 und EP 2 289 751 A1 bekannt.

Es ist Aufgabe der Erfindung, ein Verfahren zum Betreiben einer Antriebseinrichtung für ein Kraftfahrzeug vorzuschlagen, welches gegenüber bekannten Verfahren Vorteile aufweist, insbesondere ein rasches und zügiges Anfahren des Kraftfahrzeugs ermöglicht.

Dies wird erfindungsgemäß mit einem Verfahren zum Betreiben einer Antriebseinrichtung mit den Merkmalen des Anspruchs 1 erreicht. Dabei ist vorgesehen, dass in dem Anfahrbetrieb die Brennkraftmaschine bei zumindest teilweise geschlossener zweiter Schaltkupplung und eingekoppeltem zweiten Teilgetriebe zum Antreiben eines elektrischen Generators betrieben und mittels des Generators bereitgestellte elektrische Energie zum zusätzlichen Antreiben der Ausgangswelle durch den elektrischen Motor verwendet wird, und dass in einem Nebenaggregatbetrieb wenigstens ein Nebenaggregat mittels einer mit der ersten Eingangswelle gekoppelten elektrischen Maschine bei geöffneter erster Schaltkupplung und ausgekoppeltem ersten Teilgetriebe angetrieben wird, wobei bei einem Umschalten von dem Nebenaggregatbetrieb in den Anfahrbetrieb die erste Schaltkupplung zum Starten der Brennkraftmaschine zumindest teilweise geschlossen, die zweite Schaltkupplung bei eingekoppeltem zweiten Teilgetriebe zumindest teilweise geschlossen und die elektrische Maschine zum Bereitstellen eines zum Starten der Brennkraftmaschine verwendeten Anlassdrehmoments verwendet wird.

Die Antriebseinrichtung dient dem Antreiben des Kraftfahrzeugs, insoweit also dem Bereitstellen eines auf das Antreiben des Kraftfahrzeugs gerichteten Drehmoments. Zum Bereitstellen des Drehmoments verfügt die Antriebseinrichtung über die Brennkraftmaschine. Diese ist über das Doppelkupplungsgetriebe an wenigstens eine Radachse des Kraftfahrzeugs angeschlossen, sodass wenigstens ein Rad der Radachse über das Doppelkupplungsgetriebe mittels der Brennkraftmaschine antreibbar ist. Das Doppelkupplungsgetriebe verfügt über die erste Eingangswelle und die zweite Eingangswelle.

Die beiden Eingangswellen sind jeweils über eine Schaltkupplung an die Brennkraftmaschine angeschlossen und insoweit mit der Brennkraftmaschine koppelbar beziehungsweise wirkverbindbar. Zwischen der ersten Eingangswelle und der Brennkraftmaschine ist die erste Schaltkupplung und zwischen der zweiten Eingangswelle und der Brennkraftmaschine die zweite Schaltkupplung vorgesehen. Ist die jeweilige Schaltkupplung zumindest teilweise geschlossen, so wird ein Drehmoment zwischen der Brennkraftmaschine und der jeweiligen Eingangswelle übertragen. Ist die Schaltkupplung hingegen vollständig geöffnet, so ist die Wirkverbindung zwischen der Brennkraftmaschine und der jeweiligen Eingangswelle unterbrochen.

Zusätzlich zu den beiden Eingangswellen verfügt das Doppelkupplungsgetriebe über die Ausgangswelle, welche mit der wenigstens einen Radachse beziehungsweise dem wenigstens einen Rad der Radachse gekoppelt beziehungsweise koppelbar ist. Beispielsweise ist die Ausgangswelle mit dem Rad der Radachse permanent verbunden, beispielsweise über ein Mittendifferentialgetriebe und/oder ein Achsdifferentialgetriebe. Im Falle des Mittendifferentialgetriebes ist die Ausgangswelle des Doppelkupplungsgetriebes mit mehreren Radachsen verbunden, wobei zwischen dem Mittendifferentialgetriebe und der jeweiligen Radachse jeweils ein Achsdifferentialgetriebe vorgesehen sein kann.

Im Rahmen dieser Beschreibung werden zwei Ansätze zur Beschleunigung eines Anfahrvorgangs des Kraftfahrzeugs vorgeschlagen. In jedem Fall wird jedoch zum Anfahren des Kraftfahrzeugs die Antriebseinrichtung in dem Anfahrbetrieb betrieben. Zunächst kann vorgesehen sein, dass in dem Anfahrbetrieb die mit der ersten Eingangswelle gekoppelte elektrische Maschine bei zumindest teilweise geschlossener erster Schaltkupplung und ausgekoppeltem ersten Teilgetriebe und zumindest teilweise geschlossener zweiter Schaltkupplung und eingekoppeltem zweiten Teilgetriebe zum Bereitstellen des zum Starten der Brennkraftmaschine verwendeten Anlassdrehmoments und des auf das Anfahren des Kraftfahrzeugs gerichteten Antriebsdrehmoments an der Ausgangswelle verwendet wird.

Das Anfahren des Kraftfahrzeugs soll insoweit bei stillstehender Brennkraftmaschine begonnen werden und diese während des Anfahrens gestartet werden. Unter dem Starten der Brennkraftmaschine ist dabei das Erhöhen der Drehzahl der Brennkraftmaschine in Richtung ihrer Leerlaufdrehzahl zu verstehen, insbesondere ausgehend aus dem Stillstand der Brennkraftmaschine. Zum Erhöhen der Drehzahl der Brennkraftmaschine wird das Anlassdrehmoment an dieser angelegt. Das Anlassdrehmoment wird mittels der elektrischen Maschine erzeugt, die mit der ersten Eingangswelle des Doppelkupplungsgetriebes verbunden beziehungsweise gekoppelt ist.

Bevorzugt ist die elektrische Maschine starr und/oder permanent mit der ersten Eingangswelle gekoppelt. Das bedeutet, dass zum Starten der Brennkraftmaschine beziehungsweise zum Anlegen des Anlassdrehmoments an der Brennkraftmaschine die erste Schaltkupplung zumindest teilweise geschlossen wird, insbesondere vollständig geschlossen wird. Um eine unmittelbare Wirkverbindung zwischen der ersten Eingangswelle und der Ausgangswelle zu vermeiden, wird das erste Teilgetriebe ausgekoppelt. Darunter ist zu verstehen, dass an dem ersten Teilgetriebe kein Gang eingelegt ist, sondern vielmehr das erste Teilgetriebe im Leerlauf vorliegt.

Zum Bereitstellen des Antriebsdrehmoments an der Ausgangswelle des Doppelkupplungsgetriebes wird das von der elektrischen Maschine bereitgestellte Drehmoment zunächst über die erste Schaltkupplung an die Brennkraftmaschine und zudem über die zumindest teilweise geschlossene zweite Schaltkupplung an die zweite Eingangswelle übertragen. Weil gleichzeitig das zweite Teilgetriebe eingekoppelt ist, also ein Gang, insbesondere ein Anfahrgang, eingelegt ist, wird das Drehmoment in Form des Antriebsdrehmoments von der zweiten Eingangswelle an die Ausgangswelle übertragen und steht dort für das Anfahren beziehungsweise Beschleunigen des Kraftfahrzeugs bereit.

Eine derartige Vorgehensweise ermöglicht insbesondere ein durchgehendes Betreiben eines Nebenaggregats, welches mit der elektrischen Maschine zumindest zeitweise, vorzugsweise permanent, wirkverbunden ist. Im Stillstand des Kraftfahrzeugs, also vor dem Anfahren des Kraftfahrzeugs, ist die erste Schaltkupplung geöffnet und das erste Teilgetriebe ausgekoppelt. Zudem steht die Brennkraftmaschine still. Das mit der elektrischen Maschine gekoppelte Nebenaggregat kann nun mittels der elektrischen Maschine angetrieben werden. Beispielsweise dreht hierbei die erste Eingangswelle frei mit.

Es könnte nun vorgesehen sein, das Anfahren des Kraftfahrzeugs durch Einkuppeln des ersten Teilgetriebes mittels der elektrischen Maschine vorzunehmen, also die erste Eingangswelle unmittelbar mit der Ausgangswelle über das erste Teilgetriebe zu koppeln. Gleichzeitig könnte durch zumindest teilweises Schließen der ersten Schaltkupplung das Anlassdrehmoment an der Brennkraftmaschine zu deren Starten angelegt werden. Hierzu wäre es jedoch notwendig, zunächst die Drehzahl der elektrischen Maschine und mithin des Nebenaggregats zu verringern, insbesondere bis in den Stillstand. Erst anschließend kann das erste Teilgetriebe eingekuppelt werden.

Um den mit einer solchen Vorgehensweise einhergehenden Stillstand des Nebenaggregats zu vermeiden, wird nun die vorstehend skizzierte Vorgehensweise durchgeführt, werden also sowohl die erste Schaltkupplung als auch die zweite Schaltkupplung zumindest teilweise geschlossen, wobei das erste Teilgetriebe ausgekoppelt und das zweite Teilgetriebe eingekoppelt ist. Mit einer derartigen Vorgehensweise kann das Nebenaggregat durchgehend betrieben werden, obwohl die elektrische Maschine gleichzeitig zum Starten der Brennkraftmaschine und zum Anfahren des Kraftfahrzeugs dient. Zudem wird eine unmittelbare Reaktion des Kraftfahrzeugs realisiert, sodass ein hervorragendes Ansprechverhalten vorliegt.

Die Erfindung sieht vor, dass in dem auf das Anfahren des Kraftfahrzeugs gerichteten Anfahrbetrieb der Antriebseinrichtung die Brennkraftmaschine bei zumindest teilweise geschlossener zweiter Schaltkupplung und eingekoppeltem zweiten Teilgetriebe zum Antreiben des elektrischen Generators und zum Bereitstellen des Antriebsdrehmoments an der Ausgangswelle betrieben und die mittels des Generators bereitgestellte elektrische Energie zum zusätzlichen Antreiben der Ausgangswelle durch den mit der Ausgangswelle gekoppelten elektrischen Motor verwendet wird.

Es ist also vorgesehen, mittels der Brennkraftmaschine unmittelbar sowohl die Ausgangswelle als auch den elektrischen Generator anzutreiben. Hierzu ist die zweite Schaltkupplung zumindest teilweise geschlossen und das zweite Teilgetriebe eingekoppelt. Vorzugsweise ist zudem die erste Schaltkupplung vollständig geöffnet und/oder das erste Teilgetriebe ausgekoppelt. Lediglich der Vollständigkeit halber sei darauf hingewiesen, dass auch die umgekehrte Vorgehensweise realisierbar ist, bei welcher also die erste Schaltkupplung zumindest teilweise geschlossen und das erste Teilgetriebe eingekoppelt ist, wohingegen die zweite Schaltkupplung vollständig geöffnet und/oder das zweite Teilgetriebe ausgekoppelt ist.

Das von der Brennkraftmaschine bereitgestellte Drehmoment teilt sich insoweit auf das Antriebsdrehmoment und das zum Antreiben des Generators benötigte Drehmoment auf. Das bedeutet, dass nicht das gesamte von der Brennkraftmaschine bereitgestellte Drehmoment über das Doppelkupplungsgetriebe übertragen wird, sondern teilweise von dem elektrischen Generator aufgenommen wird. Die von dem Generator bereitgestellte Energie wird zum Betreiben des elektrischen Motors verwendet, der mit der Ausgangswelle gekoppelt ist, vorzugsweise starr und/oder permanent.

In anderen Worten wird die Ausgangswelle nicht lediglich mittels der Brennkraftmaschine über das Doppelkupplungsgetriebe angetrieben, sondern zusätzlich von dem elektrischen Motor. Eine solche Vorgehensweise ist insbesondere dann zuträglich, wenn die zweite Schaltkupplung lediglich zum Übertragen eines Teils des maximal von der Brennkraftmaschine bereitstellbaren Drehmoments beim Anfahren des Kraftfahrzeugs ausgelegt ist. In jedem Fall kann ein Teil des von der Brennkraftmaschine bereitgestellten Drehmoments unter Umgehung des Doppelkupplungsgetriebes und mithin unter Umgehung der zweiten Schaltkupplung zum Antreiben der Ausgangswelle herangezogen werden.

Die Brennkraftmaschine ist insoweit einerseits über das Doppelkupplungsgetriebe unmittelbar als auch über den Generator und den Motor lediglich mittelbar mit der Ausgangswelle verbunden. Mit der beschriebenen Vorgehensweise steht ein hohes Antriebsdrehmoment an der Ausgangswelle zum Anfahren des Kraftfahrzeugs bereit.

Selbstverständlich können die beiden genannten Vorgehensweisen auch miteinander kombiniert werden. Hierzu ist beispielsweise zunächst die elektrische Maschine mit der Eingangswelle gekoppelt. Es kann nun vorgesehen sein, die erste Schaltkupplung bei ausgekoppeltem erstem Teilgetriebe zu schließen und die Brennkraftmaschine nach ihrem Starten mittels der elektrischen Maschine zum Antreiben derselben zu verwenden. Insoweit ist es vorgesehen, die beiden Vorgehensweise während des Anfahrens des Kraftfahrzeugs nacheinander durchzuführen. Zunächst wird die Brennkraftmaschine gestartet beziehungsweise angelassen und das Anfahren des Kraftfahrzeugs bereits eingeleitet, also bereits ein Antriebsdrehmoment an der Ausgangswelle bereitgestellt.

Nach dem Starten der Brennkraftmaschine treibt die Brennkraftmaschine die Ausgangswelle über das Doppelkupplungsgetriebe, nämlich über die zweite Schaltkupplung und das zweite Teilgetriebe unmittelbar an. Gleichzeitig wird die Brennkraftmaschine zum Antreiben der elektrischen Maschine verwendet, welche als Generator dient. Die mittels des Generators beziehungsweise der elektrischen Maschine bereitgestellte elektrische Energie wird zum Betreiben des Motors verwendet, welcher die Ausgangswelle zusätzlich antreibt. Entsprechend ist sowohl ein unterbrechungsfreier Betrieb des Nebenaggregats als auch eine besonders gute Beschleunigung des Kraftfahrzeugs sichergestellt.

Die Erfindung sieht vor, dass in einem Nebenaggregatbetrieb wenigstens ein Nebenaggregat mittels der elektrischen Maschine bei geöffneter erster Schaltkupplung und ausgekoppeltem ersten Teilgetriebe angetrieben wird. Hierauf wurde grundsätzlich vorstehend bereits eingegangen. Das Antreiben des Nebenaggregats mittels der elektrischen Maschine wird in dem Nebenaggregatbetrieb durchgeführt, in welchem vorzugsweise die Brennkraftmaschine deaktiviert ist, sich also im Stillstand befindet. In dem Nebenaggregatbetrieb dient die elektrische Maschine also ausschließlich dem Betreiben des wenigstens einen Nebenaggregats.

Das Nebenaggregat kann grundsätzlich beliebig ausgestaltet sein. Beispielsweise liegt das Nebenaggregat in Form eines Klimakompressors oder dergleichen vor. Das Nebenaggregat ist grundsätzlich derart in die Antriebseinrichtung integriert, dass es sowohl mittels der Brennkraftmaschine als auch mittels der elektrischen Maschine antreibbar ist. Dies liegt insbesondere darin begründet, dass das Nebenaggregat, beispielsweise im Falle seiner Ausgestaltung als Klimakompressor, eine hohe Nennleistung aufweist.

Muss das Nebenaggregat dauerhaft mittels der elektrischen Maschine angetrieben werden, während die Brennkraftmaschine still steht, so muss die elektrische Energie aus einem Energiespeicher entnommen werden. Aufgrund der hohen Nennleistung des Nebenaggregats würde sich dieser rasch leeren. Aus diesem Grund soll das Nebenaggregat mittels der Brennkraftmaschine angetrieben werden, sofern diese sich im Betrieb befindet, also eine von Null verschiedene Drehzahl aufweist. Das Nebenaggregat ist hierzu vorzugsweise ebenso wie die elektrische Maschine mit der ersten Eingangswelle gekoppelt, nämlich insbesondere starr und/oder permanent.

Die Erfindung sieht vor, dass bei einem Umschalten von dem Nebenaggregatbetrieb in den Anfahrbetrieb die erste Schaltkupplung zum Starten der Brennkraftmaschine zumindest teilweise geschlossen und die zweite Schaltkupplung bei eingekoppeltem zweiten Teilgetriebe zumindest teilweise geschlossen wird. Durch das Schließen der beiden Schaltkupplungen wird das von der elektrischen Maschine bereitgestellte Drehmoment nicht nur zum Antreiben des Nebenaggregats verwendet, sondern gleichzeitig zum Bereitstellen des Anlassdrehmoments an der Brennkraftmaschine und des Antriebsdrehmoments an der Ausgangswelle. Hierzu wird das zweite Teilgetriebe eingekoppelt, nämlich bevor die zweite Schaltkupplung zumindest teilweise geschlossen wird. Im Rahmen des Einkoppelns des zweiten Teilgetriebes wird ein Gang eingelegt, insbesondere ein Anfahrgang. Die beschriebene Vorgehensweise hat den Vorteil, dass ohne eine Betriebsunterbrechung des Nebenaggregats ein zügiges Anfahren des Kraftfahrzeugs umgesetzt wird.

Eine Weiterbildung der Erfindung sieht vor, dass das Schließen der zweiten Schaltkupplung nach dem Schließen der ersten Schaltkupplung erfolgt. Durch das Schließen der ersten Schaltkupplung wird das Starten der Brennkraftmaschine eingeleitet, indem das Drehmoment an ihr angelegt wird. Um einen zu raschen Anstieg des von der elektrischen Maschine angeforderten Drehmoments zu vermeiden, soll zunächst die Drehzahl der Brennkraftmaschine etwas erhöht werden, bevor die zweite Schaltkupplung zum Anfahren des Kraftfahrzeugs geschlossen wird.

Vorzugsweise wird die zweite Schaltkupplung geschlossen, wenn die Drehzahl der Brennkraftmaschine größer als Null, jedoch kleiner als die Leerlaufdrehzahl ist. Beispielsweise wird die zweite Schaltkupplung bei einer Drehzahl der Brennkraftmaschine geschlossen, die von Null verschieden ist und höchstens 10 %, höchstens 20 %, höchstens 30 %, höchstens 40 % oder höchstens 50 % der Leerlaufdrehzahl der Brennkraftmaschine entspricht. Mit einer derartigen Vorgehensweise wird eine übermäßige Belastung der elektrischen Maschine zuverlässig verhindert.

Eine weitere bevorzugte Ausgestaltung der Erfindung sieht vor, dass in dem Anfahrbetrieb nach dem Starten der Brennkraftmaschine das Antriebsdrehmoment zumindest zeitweise von der Brennkraftmaschine und der elektrischen Maschine bereitgestellt wird. Sind sowohl die erste Schaltkupplung als auch die zweite Schaltkupplung geschlossen, so wird das von der elektrischen Maschine bereitgestellte Drehmoment über die erste Schaltkupplung auch an der zweiten Schaltkupplung bereitgestellt.

Weil diese ebenfalls geschlossen ist, wirkt das von der elektrischen Maschine bereitgestellte Drehmoment über die erste Schaltkupplung, die zweite Schaltkupplung und das eingekuppelte zweite Teilgetriebe unmittelbar auf die Ausgangswelle. Um das Anfahren des Kraftfahrzeugs weiter zu beschleunigen, wird die elektrische Maschine bei geschlossener erster Schaltkupplung auch nach dem Starten der Brennkraftmaschine weiter betrieben, sodass das aus der Ausgangswelle anliegende Antriebsdrehmoment von der Brennkraftmaschine und der elektrischen Maschine gemeinsam bereitgestellt wird.

Eine bevorzugte Ausgestaltung der Erfindung sieht vor, dass als erstes Teilgetriebe ein Teilgetriebe mit einer kleineren minimalen Übersetzung als das zweite Teilgetriebe verwendet wird. Beide Teilgetriebe sind als Gangwechselgetriebe ausgebildet, ermöglichen also jeweils das Einstellen unterschiedlicher Übersetzungen. Dabei sind die Übersetzungen, welche wiederum Gängen des Doppelkupplungsgetriebes zugeordnet sind, zwischen den beiden Teilgetrieben gestuft. Beispielsweise weist das erste Teilgetriebe die ungeraden Gänge des Doppelkupplungsgetriebes, also zumindest einen ersten Gang, und das zweite Teilgetriebe alle geraden Gänge, also zumindest einen zweiten Gang, auf. Der erste Gang weist die kleinste Übersetzung des Doppelkupplungsgetriebes auf. Wird also die im Rahmen dieser Beschreibung beschriebene Vorgehensweise durchgeführt, so erfolgt das Anfahren beispielsweise im zweiten Gang des Doppelkupplungsgetriebes, zumindest jedoch nicht in dem ersten Gang, welcher die minimale Übersetzung des Doppelkupplungsgetriebes aufweist.

Beispielsweise kann es vorgesehen sein, in Abhängigkeit von einem Betriebszustand des Nebenaggregats unterschiedliche Anfahrbetriebsarten durchzuführen. Wird das Nebenaggregat bei abgeschalteter Brennkraftmaschine mittels der elektrischen Maschine angetrieben, so wird eine erste Anfahrbetriebsart durchgeführt. In dieser wird die im Rahmen dieser Beschreibung erläuterte Vorgehensweise durchgeführt, sodass ein durchgehendes Antreiben des Nebenaggregats mittels der elektrischen Maschine erfolgt.

Ist hingegen das Nebenaggregat außer Betrieb, so kann eine zweite Anfahrbetriebsart durchgeführt werden. In dieser wird beispielsweise zunächst die Brennkraftmaschine mittels der elektrischen Maschine gestartet und anschließend das Antriebsdrehmoment an der Ausgangswelle mittels der Brennkraftmaschine bereitgestellt. Alternativ kann es auch vorgesehen sein, mittels der Brennkraftmaschine zugleich die Ausgangswelle und den Generator anzutreiben und den Motor zum zusätzlichen Antreiben der Ausgangswelle heranzuziehen. In diesem Fall wird ein besonders rasches Beschleunigen des Kraftfahrzeugs ermöglicht.

Eine weitere bevorzugte Ausführungsform der Erfindung sieht vor, dass für einen Gangwechsel des Doppelkupplungsgetriebes während des Anfahrbetriebs die erste Schaltkupplung geöffnet, das erste Teilgetriebe eingekoppelt und anschließend die erste Schaltkupplung geschlossen und die zweite Schaltkupplung geöffnet wird. Das Anfahren des Kraftfahrzeugs erfolgt gemäß den vorstehenden Ausführungen zunächst über die zweite Schaltkupplung, über die die Brennkraftmaschine mit der Ausgangswelle gekoppelt ist. Das zweite Teilgetriebe ist eingekoppelt, sodass ein bestimmter Gang an diesem eingestellt ist, insbesondere der Gang mit der kleinsten Übersetzung des zweiten Teilgetriebes.

Soll nun die Übersetzung beziehungsweise der Gang gewechselt werden, so wird das Anfahren des Kraftfahrzeugs allein mittels der Brennkraftmaschine fortgesetzt und hierzu die elektrische Maschine von der Ausgangswelle entkoppelt. Anschließend wird das erste Teilgetriebe eingekoppelt und anschließend die erste Schaltkupplung geschlossen und die zweite Schaltkupplung geöffnet. Vor dem Einkoppeln des ersten Teilgetriebes wird die elektrische Maschine vorzugsweise zum Synchronisieren des ersten Teilgetriebes verwendet, also die erste Eingangswelle auf eine Drehzahl gebracht, welche das Einkoppeln des ersten Teilgetriebes bestimmungsgemäß ermöglicht. Die beschriebene Vorgehensweise ermöglicht ein Fortsetzen des Anfahrens des Kraftfahrzeugs bei gleichzeitig fortgesetztem Betrieb des Nebenaggregats.

Die Erfindung sieht vor, dass in dem Anfahrbetrieb während des Antriebs der Ausgangswelle mittels des elektrischen Motors die zweite Schaltkupplung nur teilweise geschlossen wird. Entsprechend wird nur ein Teil des mittels der Brennkraftmaschine bereitgestellten Drehmoments in Form des Antriebsdrehmoments zum Antreiben der Ausgangswelle herangezogen. Der restliche Teil des bereitgestellten Drehmoments wird zum Antreiben des Generators verwendet. Bevorzugt wird der Generator derart eingestellt, dass die zweite Schaltkupplung schlupffrei ist, obwohl sie lediglich teilweise geschlossen ist. Hierzu wird beispielsweise eine Drehmomentregelung des Generators durchgeführt, wobei eine Drehzahldifferenz über die zweite Schaltkupplung als Regelgröße verwendet wird. Dies ermöglicht einen besonders geringen Verschleiß der zweiten Schaltkupplung, trotz des hohen an der Ausgangswelle bereitgestellten Antriebsdrehmoments.

Die Erfindung betrifft weiterhin eine Antriebseinrichtung für ein Kraftfahrzeug, insbesondere zur Durchführung des Verfahrens gemäß den Ausführungen im Rahmen dieser Beschreibung, mit einer Brennkraftmaschine und einem Doppelkupplungsgetriebe, wobei das Doppelkupplungsgetriebe eine erste Eingangswelle, eine zweite Eingangswelle sowie eine Ausgangswelle aufweist, und die erste Eingangswelle über ein erstes Teilgetriebe und die zweite Eingangswelle über ein zweites Teilgetriebe an die Ausgangswelle angeschlossen ist, und wobei die Brennkraftmaschine über eine erste Schaltkupplung an die erste Eingangswelle und über eine zweite Schaltkupplung an die zweite Eingangswelle angeschlossen ist. Die Antriebseinrichtung dazu vorgesehen und ausgebildet, in einem auf ein Anfahren des Kraftfahrzeugs gerichteten Anfahrbetrieb der Antriebseinrichtung die Brennkraftmaschine bei zumindest teilweise geschlossener zweiter Schaltkupplung und eingekoppeltem zweiten Teilgetriebe zum Bereitstellen eines auf das Anfahren des Kraftfahrzeugs gerichteten Antriebsdrehmoments an der Ausgangswelle zu betreiben und elektrische Energie zum zusätzlichen Antreiben der Ausgangswelle durch einen mit der Ausgangswelle gekoppelten elektrischen Motor zu verwenden.

Dabei ist vorgesehen, dass die Antriebseinrichtung weiterhin dazu vorgesehen und ausgebildet ist, in dem Anfahrbetrieb die Brennkraftmaschine bei zumindest teilweise geschlossener zweiter Schaltkupplung und eingekoppeltem zweiten Teilgetriebe zum Antreiben eines elektrischen Generators zu betreiben und mittels des Generators bereitgestellte elektrische Energie zum zusätzlichen Antreiben der Ausgangswelle den elektrischen Motor zu verwenden, und in einem Nebenaggregatbetrieb wenigstens ein Nebenaggregat mittels einer mit der ersten Eingangswelle gekoppelte elektrische Maschine bei geöffneter erster Schaltkupplung und ausgekoppeltem ersten Teilgetriebe anzutreiben, wobei bei einem Umschalten von dem Nebenaggregatbetrieb in den Anfahrbetrieb die erste Schaltkupplung zum Starten der Brennkraftmaschine zumindest teilweise geschlossen, die zweite Schaltkupplung bei eingekoppeltem zweiten Teilgetriebe zumindest teilweise geschlossen und die elektrische Maschine zum Bereitstellen eines zum Starten der Brennkraftmaschine wenden Anlassdrehmoments verwendet wird.

Auf die Vorteile einer derartigen Vorgehensweise beziehungsweise einer derartigen Ausgestaltung der Antriebseinrichtung wurde bereits hingewiesen. Sowohl die Antriebseinrichtung als auch das Verfahren zu ihrem Betreiben können gemäß den Ausführungen im Rahmen dieser Beschreibung weitergebildet sein, sodass insoweit auf diese verwiesen wird. Die Antriebseinrichtung ist zur Durchführung des beschriebenen Verfahrens vorgesehen und ausgebildet.

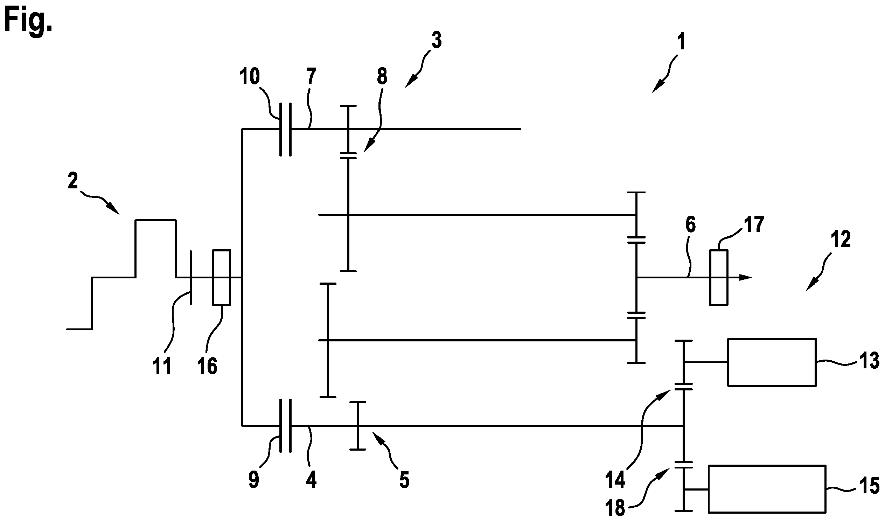

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung einer Antriebseinrichtung für ein Kraftfahrzeug, wobei ein Nebenaggregat mittels einer elektrischen Maschine angetrieben wird.

Die Figur zeigt eine schematische Darstellung einer Antriebseinrichtung 1 für ein Kraftfahrzeug. Die Antriebseinrichtung 1 weist eine Brennkraftmaschine 2 sowie ein Doppelkupplungsgetriebe 3 auf. Das Doppelkupplungsgetriebe 3 verfügt wiederum über eine erste Eingangswelle 4, die über ein erstes Teilgetriebe 5 mit einer Ausgangswelle 6 des Doppelkupplungsgetriebes 3 koppelbar ist, nämlich wenn das erste Teilgetriebe 5 eingekoppelt ist, also an dem ersten Teilgetriebe 5 ein Gang eingelegt ist. Weiterhin verfügt das Doppelkupplungsgetriebe 3 über eine zweite Eingangswelle 7, die über ein zweites Teilgetriebe 8 an die Ausgangswelle 6 angeschlossen ist. Die zweite Eingangswelle 7 ist mit der Ausgangswelle 6 wirkverbunden, wenn das zweite Teilgetriebe eingekoppelt ist, also an dem zweiten Teilgetriebe 8 ein Gang eingelegt ist.

Die erste Eingangswelle 4 ist über eine erste Schaltkupplung 9 mit der Brennkraftmaschine 2 koppelbar. Analog hierzu ist die zweite Eingangswelle 7 über eine zweite Schaltkupplung 10 mit der Brennkraftmaschine 2 koppelbar. Beispielsweise sind die Schaltkupplungen 9 und 10 jeweils eingangsseitig an die Brennkraftmaschine 2 angeschlossen, vorzugsweise starr und/oder permanent. Ausgangsseitig sind die Schaltkupplung 9 und 10 mit der jeweiligen Eingangswelle 4 beziehungsweise 7 gekoppelt, nämlich starr und permanent. Es kann vorgesehen sein, dass zwischen den Schaltkupplungen 9 und 10 und der Brennkraftmaschine 2 eine weitere Schaltkupplung 11 vorliegt. Diese kann als Anfahrkupplung ausgestaltet sein. Die Schaltkupplung 11 ist jedoch optional.

Die Antriebseinrichtung 1 verfügt über einen Nebentrieb 12, der wiederum wenigstens ein Nebenaggregat 13 aufweist. Das Nebenaggregat 13 ist mittels der Brennkraftmaschine 2 antreibbar. Zu diesem Zweck ist es mit der ersten Eingangswelle 4 gekoppelt, vorzugsweise starr und/oder permanent. In dem hier dargestellten Ausführungsbeispiel ist das Nebenaggregat 13 über eine Getriebestufe 14 mit der ersten Eingangswelle 4 verbunden. Weiterhin dargestellt sind eine elektrische Maschine 15, ein elektrischer Generator 16 sowie ein elektrischer Motor 17.

Die elektrische Maschine 15 ist mit der ersten Eingangswelle 4 gekoppelt, vorzugsweise starr und/oder permanent, insbesondere über eine Getriebestufe 18. Die elektrische Maschine 15 dient unter anderem dem Antreiben des Nebenaggregats 13, insbesondere bei sich im Stillstand befindender Brennkraftmaschine 2. Der Generator 16 ist mittels der Brennkraftmaschine 2 antreibbar. Er ist beispielsweise über die Schaltkupplung 11 oder- alternativ - unmittelbar an die Brennkraftmaschine 2 angeschlossen beziehungsweise mit ihr gekoppelt. Der Motor 17 hingegen dient dem Antreiben der Ausgangswelle 6 und ist hierzu mit dieser gekoppelt, vorzugsweise starr und/oder permanent.

Es kann nun vorgesehen sein, in einem auf ein Anfahren des Kraftfahrzeugs gerichteten Anfahrbetrieb der Antriebseinrichtung 1 die mit der ersten Eingangswelle 4 gekoppelte elektrische Maschine 15 bei zumindest teilweise geschlossener erster Schaltkupplung 9 und ausgekoppeltem ersten Teilgetriebe 5 und zumindest teilweise geschlossener zweiter Schaltkupplung 9 und eingekoppeltem zweiten Teilgetriebe 8 zum Bereitstellen eines zum Starten der Brennkraftmaschine 2 verwendeten Anlassdrehmoments und eines auf das Anfahren des Kraftfahrzeugs gerichteten Antriebsdrehmoments an der Ausgangswelle 6 verwendet wird.

Die Erfindung sieht vor, dass bei stillstehender Brennkraftmaschine 2 zunächst ein Nebenaggregatbetrieb durchgeführt wird, in welchem das Nebenaggregat 13 mittels der elektrischen Maschine 15 angetrieben wird, wobei die erste Schaltkupplung 9 geöffnet und das erste Teilgetriebe 5 ausgekoppelt ist. Während des Anfahrens des Kraftfahrzeugs soll das Nebenaggregat 13 weiterhin mittels der elektrischen Maschine 15 angetrieben werden. Gleichzeitig soll die elektrische Maschine 15 dem Starten der Brennkraftmaschine 2 dienen. Aus diesem Grund wird die erste Schaltkupplung 9 zumindest teilweise geschlossen, sodass an der Brennkraftmaschine 2 das Anlassdrehmoment mittels der elektrischen Maschine 15 bereitgestellt wird. Zudem wird das zweite Teilgetriebe 8 eingekuppelt, also an dem zweiten Teilgetriebe 8 ein Gang eingelegt, falls dies zuvor nicht der Fall war.

Nachfolgend wird die zweite Schaltkupplung 10 ebenfalls teilweise geschlossen, sodass mittels der elektrischen Maschine 15 die Ausgangswelle 6 angetrieben wird. In diesem Anfahrbetrieb wird also mittels der elektrischen Maschine 15 das Nebenaggregat 13 weiter angetrieben und gleichzeitig das von der elektrischen Maschine 15 bereitgestellte Drehmoment zum Starten der Brennkraftmaschine 2 und zum Anfahren des Kraftfahrzeugs herangezogen. Entsprechend ist bei fortgesetztem Betrieb des Nebenaggregats 13 ein rasches Anfahren des Kraftfahrzeugs realisiert.

Zusätzlich ist es in dem Anfahrbetrieb vorgesehen, die Brennkraftmaschine 2 bei zumindest teilweise geschlossener zweiter Schaltkupplung 10 und eingekoppeltem zweiten Teilgetriebe 8 zum Antreiben des elektrischen Generators 16 und zum Bereitstellen des Antriebsdrehmoments an der Ausgangswelle 6 zu betreiben und mittels des Generators 16 bereitgestellte Energie zum zusätzlichen Antreiben der Ausgangswelle 6 durch den mit der Ausgangswelle 6 gekoppelten elektrischen Motor 17 zu verwenden.

In anderen Worten wird ein Teil des von der Brennkraftmaschine 2 bereitgestellten Drehmoments unmittelbar über das Doppelkupplungsgetriebe 3 übertragen und steht an der Ausgangswelle 6 als Teil des Antriebsdrehmoments bereit. Ein weiterer Teil des von der Brennkraftmaschine 2 bereitgestellten Drehmoments wird von dem Generator 16 zum Bereitstellen elektrischer Energie aufgenommen. Die auf diese Art und Weise bereitgestellte elektrische Energie wird zum Antreiben des Motors 17 verwendet, welcher die Ausgangswelle 6 zusätzlich antreibt. Insoweit wird lediglich ein Teil des von der Brennkraftmaschine 2 bereitgestellten Drehmoments über das Doppelkupplungsgetriebe 3, insbesondere über die zweite Schaltkupplung 10, übertragen.

Das bedeutet schlussendlich, dass an der Ausgangswelle 6 ein Antriebsdrehmoment bereitgestellt werden kann, welches größer ist als ein Auslegungsdrehmoment der zweiten Schaltkupplung 10. Es soll darauf hingewiesen werden, dass die beschriebene Vorgehensweise auch mittels der ersten Schaltkupplung 9 beziehungsweise des ersten Teilgetriebes 5 durchgeführt werden kann. Rein exemplarisch wurde in dem hier dargestellten Ausführungsbeispiel auf die zweite Schaltkupplung 10 und das zweite Teilgetriebe 8 abgestellt.

## Patentansprüche

1. Verfahren zum Betreiben einer Antriebseinrichtung (1) für ein Kraftfahrzeug, mit einer Brennkraftmaschine (2) und einem Doppelkupplungsgetriebe (3), wobei das Doppelkupplungsgetriebe (3) eine erste Eingangswelle (4), eine zweite Eingangswelle (7) sowie eine Ausgangswelle (6) aufweist und die erste Eingangswelle (4) über ein erstes Teilgetriebe (5) und die zweite Eingangswelle (7) über ein zweites Teilgetriebe (8) an die Ausgangswelle (6) angeschlossen ist, und wobei die Brennkraftmaschine (2) über eine erste Schaltkupplung (9) an die erste Eingangswelle (4) und über eine zweite Schaltkupplung (10) an die zweite Eingangswelle (7) angeschlossen ist, wobei in einem auf ein Anfahren des Kraftfahrzeugs gerichteten Anfahrbetrieb der Antriebseinrichtung (1) die Brennkraftmaschine (2) bei zumindest teilweise geschlossener zweiter Schaltkupplung (10) und eingekoppeltem zweiten Teilgetriebe (8) zum Bereitstellen eines auf das Anfahren des Kraftfahrzeugs gerichteten Antriebsdrehmoments an der Ausgangswelle (6) betrieben und elektrische Energie zum zusätzlichen Antreiben der Ausgangswelle (6) durch einen mit der Ausgangswelle (6) gekoppelten elektrischen Motor (17) verwendet wird, **dadurch gekennzeichnet, dass** in dem Anfahrbetrieb der Antriebseinrichtung (1) die Brennkraftmaschine (2) bei zumindest teilweise geschlossener zweiter Schaltkupplung (10) und eingekoppeltem zweiten Teilgetriebe (8) zum Antreiben eines elektrischen Generators (16) betrieben und mittels des Generators (16) bereitgestellte elektrische Energie zum zusätzlichen Antreiben der Ausgangswelle (6) durch den elektrischen Motor (17) verwendet wird, und dass in einem Nebenaggregatbetrieb wenigstens ein Nebenaggregat (13) mittels einer mit der ersten Eingangswelle (4) gekoppelten elektrischen Maschine (15) bei geöffneter erster Schaltkupplung (9) und ausgekoppeltem ersten Teilgetriebe (5) angetrieben wird, wobei bei einem Umschalten von dem Nebenaggregatbetrieb in den Anfahrbetrieb die erste Schaltkupplung (9) zum Starten der Brennkraftmaschine (2) zumindest teilweise geschlossen, die zweite Schaltkupplung (10) bei eingekoppeltem zweiten Teilgetriebe (8) zumindest teilweise geschlossen und die elektrische Maschine (15) zum Bereitstellen eines zum Starten der Brennkraftmaschine (2) verwendeten Anlassdrehmoments verwendet wird.

2. Verfahren nach Anspruch 1, **dadurch gekennzeichnet, dass** das Schlie-ßen der zweiten Schaltkupplung (10) nach dem Schließen der ersten Schaltkupplung (9) erfolgt.

3. Verfahren nach einem der vorhergehenden Ansprüche, **dadurch gekennzeichnet, dass** in dem Anfahrbetrieb nach dem Starten der Brennkraftmaschine (2) das Antriebsdrehmoment zumindest zeitweise von der Brennkraftmaschine (2) und der elektrischen Maschine (15) bereitgestellt wird.

4. Verfahren nach einem der vorhergehenden Ansprüche, **dadurch gekennzeichnet, dass** als erstes Teilgetriebe (5) ein Teilgetriebe mit einer kleineren minimalen Übersetzung als das zweite Teilgetriebe (8) verwendet wird.

5. Verfahren nach einem der vorhergehenden Ansprüche, **dadurch gekennzeichnet, dass** für einen Gangwechsel des Doppelkupplungsgetriebes (3) während des Anfahrbetriebs die erste Schaltkupplung (9) geöffnet, das erste Teilgetriebe (5) eingekoppelt und anschließend die erste Schaltkupplung (9) geschlossen und die zweite Schaltkupplung (10) geöffnet wird.

6. Verfahren nach einem der vorhergehenden Ansprüche, **dadurch gekennzeichnet, dass** in dem Anfahrbetrieb während des Antriebs der Ausgangswelle (6) mittels des elektrischen Motors (17) die zweite Schaltkupplung (10) nur teilweise geschlossen wird.

7. Antriebseinrichtung (1) für ein Kraftfahrzeug zur Durchführung des Verfahrens nach einem oder mehreren der vorhergehenden Ansprüche, mit einer Brennkraftmaschine (2) und einem Doppelkupplungsgetriebe (3), wobei das Doppelkupplungsgetriebe (3) eine erste Eingangswelle (4), eine zweite Eingangswelle (7) sowie eine Ausgangswelle (6) aufweist und die erste Eingangswelle (4) über ein erstes Teilgetriebe (5) und die zweite Eingangswelle (7) über ein zweites Teilgetriebe (8) an die Ausgangswelle (6) angeschlossen ist, und wobei die Brennkraftmaschine (2) über eine erste Schaltkupplung (9) an die erste Eingangswelle (4) und über eine zweite Schaltkupplung (10) an die zweite Eingangswelle (7) angeschlossen ist, wobei die Antriebseinrichtung (1) dazu vorgesehen und ausgebildet ist, in einem auf ein Anfahren des Kraftfahrzeugs gerichteten Anfahrbetrieb der Antriebseinrichtung (1) die Brennkraftmaschine (2) bei zumindest teilweise geschlossener zweiter Schaltkupplung (10) und eingekoppeltem zweiten Teilgetriebe (8) zum Bereitstellen eines auf das Anfahren des Kraftfahrzeugs gerichteten Antriebsdrehmoments an der Ausgangswelle (6) zu betreiben und elektrische Energie zum zusätzlichen Antreiben der Ausgangswelle (6) durch einen mit der Ausgangswelle (6) gekoppelten elektrischen Motor (17) zu verwenden, **dadurch gekennzeichnet, dass** die Antriebseinrichtung (1) weiterhin dazu vorgesehen und ausgebildet ist, in dem Anfahrbetrieb der Antriebseinrichtung (1) die Brennkraftmaschine (2) bei zumindest teilweise geschlossener zweiter Schaltkupplung (10) und eingekoppeltem zweiten Teilgetriebe (8) zum Antreiben eines elektrischen Generators (16) zu betreiben und mittels des Generators (16) bereitgestellte elektrische Energie zum zusätzlichen Antreiben der Ausgangswelle (6) durch den elektrischen Motor (17) zu verwenden, und in einem Nebenaggregatbetrieb wenigstens ein Nebenaggregat (13) mittels einer mit der ersten Eingangswelle (4) gekoppelten elektrischen Maschine (15) bei geöffneter erster Schaltkupplung (9) und ausgekoppeltem ersten Teilgetriebe (5) anzutreiben, wobei bei einem Umschalten von dem Nebenaggregatbetrieb in den Anfahrbetrieb die erste Schaltkupplung (9) zum Starten der Brennkraftmaschine (2) zumindest teilweise geschlossen, die zweite Schaltkupplung (10) bei eingekoppeltem zweiten Teilgetriebe (8) zumindest teilweise geschlossen und die elektrische Maschine (15) zum Bereitstellen eines zum Starten der Brennkraftmaschine (2) verwendeten Anlassdrehmoments verwendet wird.

## Claims

1. Method for operating a drive device (1) for a motor vehicle, comprising an internal combustion engine (2) and a dual clutch transmission (3), wherein the dual clutch transmission (3) has a first input shaft (4), a second input shaft (7) and an output shaft (6), and the first input shaft (4) is connected to the output shaft (6) via a first sub-transmission (5) and the second input shaft (7) is connected to the output shaft (6) via a second sub-transmission (8), and wherein the internal combustion engine (2) is connected to the first input shaft (4) via a first shifting clutch (9) and to the second input shaft (7) via a second shifting clutch (10), wherein, in a start-up mode of the drive device (1) aimed at starting the motor vehicle, the internal combustion engine (2) is operated with the second shifting clutch (10) at least partially closed and the second sub-transmission (8) coupled in to provide a drive torque at the output shaft (6) aimed at starting the motor vehicle, and electrical energy is used to additionally drive the output shaft (6) by means of an electric motor (17) coupled to the output shaft (6), **characterised in that,** in the start-up mode of the drive device (1), the internal combustion engine (2) is operated with the second shifting clutch (10) at least partially closed and the second sub-transmission (8) coupled in so as to drive an electrical generator (16), and electrical energy provided by means of the generator (16) is used to additionally drive the output shaft (6) by means of the electric motor (17), and **in that**, in an ancillary unit mode, at least one ancillary unit (13) is driven by means of an electric motor (15) coupled to the first input shaft (4) with the first shifting clutch (9) open and the first sub-transmission (5) decoupled, wherein, when switching from the ancillary unit mode to the start-up mode, the first shifting clutch (9) is at least partially closed for starting the internal combustion engine (2), the second shifting clutch (10) is at least partially closed with the second sub-transmission (8) coupled in, and the electric motor (15) is used for providing a starting torque used for starting the internal combustion engine (2).

2. Method according to claim 1, **characterised in that** the closing of the second shifting clutch (10) takes place after the closing of the first shifting clutch (9).

3. Method according to any of the preceding claims, **characterised in that** in the start-up mode after starting the internal combustion engine (2), the drive torque is provided at least temporarily by the internal combustion engine (2) and the electric motor (15).

4. Method according to any of the preceding claims, **characterised in that** a sub-transmission with a smaller minimum transmission ratio than the second sub-transmission (8) is used as the first sub-transmission (5).

5. Method according to any of the preceding claims, **characterised in that,** for a gear change of the dual clutch transmission (3) during the start-up mode, the first shifting clutch (9) is opened, the first sub-transmission (5) is coupled in and then the first shifting clutch (9) is closed and the second shifting clutch (10) is opened.

6. Method according to any of the preceding claims, **characterised in that,** in the start-up mode, during the driving of the output shaft (6) by means of the electric motor (17), the second shifting clutch (10) is only partially closed.

7. Drive device (1) for a motor vehicle for carrying out the method according to one or more of the preceding claims, comprising an internal combustion engine (2) and a dual clutch transmission (3), wherein the dual clutch transmission (3) has a first input shaft (4), a second input shaft (7) and an output shaft (6), and the first input shaft (4) is connected to the output shaft (6) via a first sub-transmission (5) and the second input shaft (7) is connected to the output shaft (6) via a second sub-transmission (8), and wherein the internal combustion engine (2) is connected to the first input shaft (4) via a first shifting clutch (9) and to the second input shaft (7) via a second shifting clutch (10), wherein the drive device (1) is provided and configured to operate the internal combustion engine (2) in a start-up mode of the drive device (1) aimed at starting the motor vehicle, with the second clutch (10) at least partially closed and the second sub-transmission (8) coupled in, to provide a drive torque at the output shaft (6) aimed at starting the motor vehicle and to use electrical energy to additionally drive the output shaft (6) by means of an electric motor (17) coupled to the output shaft (6), **characterised in that** the drive device (1) is further provided and configured to operate the internal combustion engine (2) in the start-up mode of the drive device (1) with the second shifting clutch (10) at least partially closed and the second sub-transmission (8) coupled in so as to drive an electrical generator (16) and to use electrical energy provided by means of the generator (16) to additionally drive the output shaft (6) by means of the electric motor (17), and in an ancillary unit mode to drive at least one ancillary unit (13) by means of an electric motor (15) coupled to the first input shaft (4) with the first shifting clutch (9) open and the first sub-transmission (5) decoupled, wherein, when switching from the ancillary unit mode to the start-up mode, the first shifting clutch (9) is at least partially closed for starting the internal combustion engine (2), the second shifting clutch (10) is at least partially closed with the second sub-transmission (8) coupled in, and the electric motor (15) is used for providing a starting torque used for starting the internal combustion engine (2).

## Revendications

1. Procédé de fonctionnement d'un dispositif d'entraînement (1) pour un véhicule automobile, avec un moteur à combustion interne (2) et une transmission à double embrayage (3), dans lequel la transmission à double embrayage (3) présente un premier arbre d'entrée (4), un second arbre d'entrée (7) et un arbre de sortie (6) et le premier arbre d'entrée (4) est raccordé à l'arbre de sortie (6) par l'intermédiaire d'une première transmission partielle (5) et le second arbre d'entrée (7) par l'intermédiaire d'une seconde transmission partielle (8), et dans lequel le moteur à combustion interne (2) est raccordé par l'intermédiaire d'un premier embrayage (9) au premier arbre d'entrée (4) et par l'intermédiaire d'un second embrayage (10) au second arbre d'entrée (7), dans lequel, dans un mode de démarrage du dispositif d'entraînement (1) orienté vers un démarrage du véhicule automobile, le moteur à combustion interne (2) fonctionne avec un second embrayage (10) au moins partiellement fermé et une seconde transmission partielle (8) couplée pour fournir à l'arbre de sortie (6) un couple d'entraînement orienté vers le démarrage du véhicule automobile, et de l'énergie électrique est utilisée pour l'entraînement supplémentaire de l'arbre de sortie (6) par un moteur électrique (17) couplé à l'arbre de sortie (6), **caractérisé en ce que,** dans le mode de démarrage du dispositif d'entraînement (1), le moteur à combustion interne (2) fonctionne avec le second embrayage (10) au moins partiellement fermé et la seconde transmission partielle (8) couplée pour entraîner un générateur électrique (16) et l'énergie électrique fournie au moyen du générateur (16) est utilisée pour l'entraînement supplémentaire de l'arbre de sortie (6) par le moteur électrique (17), et **en ce que**, dans un fonctionnement en groupe auxiliaire, au moins un groupe auxiliaire (13) est entraîné au moyen d'une machine électrique (15) couplée au premier arbre d'entrée (4) avec le premier embrayage (9) ouvert et la première transmission partielle (5) découplée, dans lequel le premier embrayage (9) est au moins partiellement fermé pour le démarrage du moteur à combustion interne (2), le second embrayage (10) est au moins partiellement fermé lorsque la seconde transmission partielle (8) est couplée et la machine électrique (15) est utilisée pour fournir un couple de démarrage utilisé pour le démarrage du moteur à combustion interne (2).

2. Procédé selon la revendication 1, **caractérisé en ce que** la fermeture du second embrayage (10) est effectuée après la fermeture du premier embrayage (9).

3. Procédé selon l'une quelconque des revendications précédentes, **caractérisé en ce que** dans le mode de démarrage, après le démarrage du moteur à combustion interne (2), le couple d'entraînement est fourni au moins temporairement par le moteur à combustion interne (2) et la machine électrique (15).

4. Procédé selon l'une quelconque des revendications précédentes, **caractérisé en ce qu'**une transmission partielle avec un rapport de transmission minimal plus petit que la seconde transmission partielle (8) est utilisé comme première transmission partielle (5).

5. Procédé selon l'une quelconque des revendications précédentes, **caractérisé en ce que,** pour un changement de rapport de la transmission à double embrayage (3) pendant le mode de démarrage, le premier embrayage (9) est ouvert, la première transmission partielle (5) est couplée, puis le premier embrayage (9) est fermé et le second embrayage (10) est ouvert.

6. Procédé selon l'une quelconque des revendications précédentes, **caractérisé en ce que,** dans le mode de démarrage, pendant l'entraînement de l'arbre de sortie (6) au moyen du moteur électrique (17), le second embrayage (10) n'est que partiellement fermé.

7. Dispositif d'entraînement (1) pour un véhicule automobile pour la mise en oeuvre du procédé selon une ou plusieurs des revendications précédentes, avec un moteur à combustion interne (2) et une transmission à double embrayage (3), dans lequel la transmission à double embrayage (3) présente un premier arbre d'entrée (4), un second arbre d'entrée (7) et un arbre de sortie (6) et le premier arbre d'entrée (4) est raccordé à l'arbre de sortie (6) par l'intermédiaire d'une première transmission partielle (5) et le second arbre d'entrée (7) par l'intermédiaire d'une seconde transmission partielle (8), et dans lequel le moteur à combustion interne (2) est raccordé par l'intermédiaire d'un premier embrayage (9) au premier arbre d'entrée (4) et par l'intermédiaire d'un second embrayage (10) au second arbre d'entrée (7), dans lequel le dispositif d'entraînement (1) est prévu et conçu, dans un mode de démarrage du dispositif d'entraînement (1) orienté vers un démarrage du véhicule automobile, pour faire fonctionner le moteur à combustion interne (2) avec un second embrayage (10) au moins partiellement fermé et une seconde transmission partielle (8) couplée pour fournir à l'arbre de sortie (6) un couple d'entraînement orienté vers le démarrage du véhicule automobile, et pour utiliser de l'énergie électrique pour l'entraînement supplémentaire de l'arbre de sortie (6) par un moteur électrique (17) couplé à l'arbre de sortie (6), **caractérisé en ce que** le dispositif d'entraînement (1) est en outre prévu et conçu pour, dans le mode de démarrage du dispositif d'entraînement (1), faire fonctionner le moteur à combustion interne (2) avec le second embrayage (10) au moins partiellement fermé et la seconde transmission partielle (8) couplée pour entraîner un générateur électrique (16) et utiliser l'énergie électrique fournie au moyen du générateur (16) pour l'entraînement supplémentaire de l'arbre de sortie (6) par le moteur électrique (17), et **en ce que**, dans un fonctionnement en groupe auxiliaire, entraîner au moins un groupe auxiliaire (13) au moyen d'une machine électrique (15) couplée au premier arbre d'entrée (4) avec le premier embrayage (9) ouvert et la première transmission partielle (5) découplée, dans lequel le premier embrayage (9) est au moins partiellement fermé pour le démarrage du moteur à combustion interne (2), le second embrayage (10) est au moins partiellement fermé lorsque la seconde transmission partielle (8) est couplée et la machine électrique (15) est utilisée pour fournir un couple de démarrage utilisé pour le démarrage du moteur à combustion interne (2).
